# EUROPEAN PATENT APPLICATION

(11) **EP 1 667 153 A1**
(43) Date of publication of application: **07.06.2006**
(21) Application number: 04771868.9
(22) Date of filing: 19.08.2004
(51) Int. Cl.: G11B 27/00, G11B 27/034, G11B 20/10, G11B 20/12

(54) **RECORDER, RECORDING METHOD AND RECORDING MEDIUM WHERE PROGRAM IS RECORDED**

(30) Priority: 19.09.2003 JP 2003327157
(71) Applicant: Ricoh Company, Ltd., Tokyo 143-8555 (JP)
(72) Inventor: SUZUKI, Ryoichi;, Yokohama-shi, Kanagawa 224-0001 (JP)
(74) Representative: Mounteney, Simon James
(86) International application number: PCT/JP2004/011907
(87) International publication number: WO 2005/029495

(57) **Abstract**

A controller determines whether an optical disk has been formatted (S1), formats the optical disk by recording a lead-in area in the recording area of the optical disc if the optical disk has not yet been formatted (S2), records content data in a contents area of the optical disk, and at the same time stores data that may be used as index information separately from the content data being recorded (S3). When a recording stop command is issued, the index information is generated (S6), a file system is recorded so that the content data and the index information can be recognized by other apparatuses, an anchor point is recorded, a temporary lead-out area is recorded, and the process is ended.

## Description

### BACKGROUND OF THE INVENTION

### 1. Field of the Invention

The present invention relates to a recording apparatus such as an optical disk drive, an index information generating apparatus, or a video image recording apparatus, a recording method implemented therein, and a computer-readable medium storing a program run on and executed by a computer system for recording time series content data such as moving image data, still image data, or compiled text data (e.g., log) and index information relating to the content data on a recording medium such as an optical disk (e.g., CD-ROM, CD-R, CD-RW, DVD-ROM, DVD-R, DVD-RW, DVD-RAM, DVD+RW, DVD+R), a magneto-optic disk (e.g., MO, MD), a magnetic disk (e.g., HD, FD), or a memory card (e.g., nonvolatile RAM, flash ROM).

### 2. Description of the Related Art

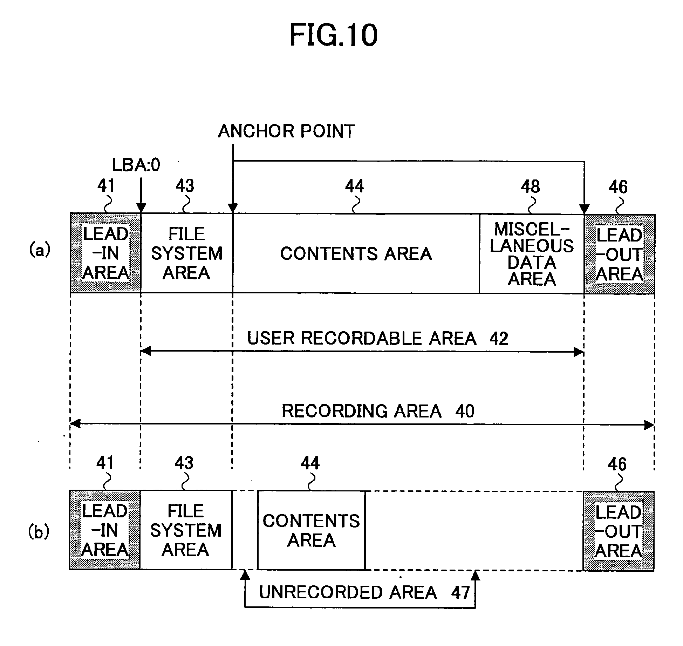

FIG. 10 is a diagram illustrating an exemplary layout of a recording medium that realizes linear addressing.

It is noted that a recording medium is divided into recording information area sectors having predetermined sizes; however, the present drawing illustrates the layout of a recording medium at the application level.

As is shown in FIG. 10 (a), a front portion of a recording area 40 of a recording medium is referred to as a lead-in area 41 and is configured to store general information pertaining to the recording medium including information on the recording medium itself followed by layout information of several recording units, for example.

When the recording medium is mounted to a recording apparatus, reading is started from the lead-in area 41. The lead-in area 41 is followed by a user recordable area 42 corresponding to the only area on which arbitrary data may actually be recorded by a user.

The address of the front sector of the user recordable area 42 is set to zero, and is represented as LBA: 0. A predetermined address of the user recordable area 42 is referred to as an anchor point corresponding to a predetermined location defined for every file system such as an operating system (OS). The address corresponds to a sector indicating the starting location for reading user data. It is noted that plural anchor points may be provided.

A file system area 43 corresponds to an area defining the location, size, time, and attribute, for example, of individual files or directories that are recorded. This is then followed by a contents area 44 in which main application data may be stored.

It is noted that a miscellaneous data area 45 for storing data other than content data may follow the contents area 44. This miscellaneous data 45 area does note necessarily have to be provided, and may be omitted in another example.

Then, a pre-recorded area referred to as a lead-out area 46 is provided, and this area extends close to the border of the recording medium. The lead-out area 46 is configured to prevent an optical pickup that reads/writes information (data) from jumping.

It is noted that the layout shown in FIG. 10 does not reflect the actual quantity ratio of recorded information. In many cases, content data take up a significant portion of the recording area 40. Also, it is noted that the areas having differing functions have to be continuously arranged; that is, when unrecorded areas 47 exist as is shown in FIG. 10 (b), recorded information cannot be replayed by a playback-dedicated apparatus and compatibility may be degraded.

In many cases, index information (index data) is generated in association with to content data such as video, audio, maps, and encyclopedias that are stored as large capacity data in the recording medium as is described above. For example, the index data may be chapter image data that are recorded along with moving image content data such as a movie.

Such chapter image data may be created/selected by a creator or generated automatically by an apparatus, and are recorded on a disk such as a CD or DVD (compact disk or digital versatile disk) as a part of moving image contents. In a specific example, image data corresponding to key scenes of a movie may be selected by the creator as chapter image data, and a user may use the chapter image data as index information by selecting one chapter image to view this image or replay content data from this image scene, for example.

However, in the case where index information is made of scenes selected by the creator, that is, images corresponding to only a portion of the contents, as is described above, the index information may not necessarily be effective for the numerous users having differing tastes and preferences.

With respect to using image information as index information, a technique is disclosed for enabling continuous playback of image information assigned as index information (e.g., see Japanese Laid-Open Patent No. 2001-76474). According to the disclosed technique, only certain images corresponding to portions designated by a user (e.g., based on time) are replayed, and in this way, the user may get a general overview of the contents in a short period of time.

### SUMMARY OF THE INVENTION

According to the above disclosed technique, a user may designate portions to be replayed, and in this respect, index information (i.e., image information in the case of the disclosed technique) according to the preferences of each user may be generated. However, in this case, the user has to designate portions to be replayed.

Thus, the user may not be able to realize effective designation of portions of the contents unless the user knows the contents beforehand, and the index information may not adequately serve its purpose of providing the user with digest information pertaining to the contents.

In other words, potions of contents corresponding to desirable portions to be acquired as index information relating to the contents may vary depending on the user, and index information adapted for such different desires and preferences cannot be adequately provided using the above disclosed technique or the technique using chapter images.

Also, it is noted that the disclosed technique relates to a playback apparatus to which plural temporal conditions may be set; however, recording operations performed by the user are not taken into account in the disclosed technique.

The present invention has been conceived in response to one or more of the problems described above, and an embodiment of the present invention relates to a technique for providing a user with index information relating to content data according to the preferences of the user while taking into account playback compatibility with existing apparatuses.

According to one embodiment of the present invention, a recording apparatus is provided that includes:
means for recording time series content data on a recording medium;
index information generating means for generating index information relating to the time series content data which index information includes a part of the content data; and
means for recording the index information generated by the index information generating means in a different area of the recording medium which different area is different from an area of the recording medium in which the content data are recorded.

According to another embodiment of the present invention, a recording apparatus is provided that includes:
means for recording time series content data on a recording medium;
index information generating means for generating index information relating to the time series content data which index information includes a part of the content data; and
means for recording the index information generated by the index information generating means on a different recording medium that is different from the recording medium on which the content data are recorded.

According to another embodiment of the present invention, a recording method is provided that includes:
a step of recording time series content data on a recording medium;
an index information generating step of generating index information relating to the time series content data which index information includes a part of the content data; and
a step of recording the index information generated by the index information generating means in a different area of the recording medium which different area is different from an area of the recording medium in which the content data are recorded.

According to another embodiment of the present invention, a recording method is provided that includes:
a step of recording time series content data on a recording medium;
an index information generating step of generating index information relating to the time series content data which index information includes a part of the content data; and
a step of recording the index information generated by the index information generating means on a different recording medium that is different from the recording medium on which the content data are recorded.

According to another embodiment of the present invention, a computer-readable medium is provided that stores a program run on a computer which program is executed by the computer to perform:
a step of recording time series content data on a recording medium;
an index information generating step of generating index information relating to the time series content data which index information includes a part of the content data; and
a step of recording the index information generated by the index information generating means in a different area of the recording medium which different area is different from an area of the recording medium in which the content data are recorded.

According to another embodiment of the present invention, a computer-readable medium is provided that stores a program run on a computer which program is executed by the computer to perform:
a step of recording time series content data on a recording medium;
an index information generating step of generating index information relating to the time series content data which index information includes a part of the content data; and
a step of recording the index information generated by the index information generating means on a different recording medium that is different from the recording medium on which the content data are recorded.

It is noted that the recording apparatuses, recording methods, and computer-readable media according to embodiments of the present invention are capable of providing a user with index information relating to content data according to various preferences of the user, for example, while taking into account playback compatibility with existing apparatuses.

### BRIEF DESCRIPTION OF THE DRAWINGS

FIG.1 is a block diagram illustrating a configuration of a system including one or more optical disk apparatuses according to an embodiment of the present invention;
FIG. 2 is a block diagram illustrating a configuration of an optical disk recording apparatus (optical disk drive) according to an embodiment of the present invention;
FIG. 3 is a block diagram illustrating a configuration of a controller according to an embodiment of the present invention;
FIGS. 4A-4C are diagrams illustrating formats realized when an index area is arranged before or after a contents area of an optical disk;
FIGS. 5A-5C are diagrams illustrating formats realized when an index area is arranged at the forefront portion or the backmost portion of a user recordable area of an optical disk;
FIG. 6 is a diagram illustrating a format realized in a case where an index area storing index information relating to content data is arranged on an optical disk that is different from the optical disk on which the content data are recorded;
FIG. 7 is a flowchart illustrating operations performed by the controller of the optical disk drive shown in FIG. 1 for recording index information after recording of content data is completed;
FIG. 8 is a flowchart illustrating operations performed by the controller of the optical disk drive of FIG. 1 for recording index information simultaneously with the recording of content data;
FIG. 9 is a flowchart illustrating a process of moving index information that is performed by the controller of the optical disk drive of FIG. 1; and
FIG. 10 is a diagram illustrating an exemplary layout of a recording medium that realizes linear addressing.

### DESCRIPTION OF THE PREFERRED EMBODIMENTS

In the following, preferred embodiments of the present invention are described with reference to the accompanying drawings.

According to an embodiment, when recording content data, arrangements are made to enable recording of a user-definable index in addition to a conventional index. The present embodiment allows a user to freely define various conditions such as the type, time interval, and number of an index. Such indexing may be realized by storing images or audio in association with a timer, for example.

As is exemplified by the DVD-Video scheme and the Video-CD scheme, in a conventional recording apparatus or a playback apparatus, the areas storing contents have to be arranged in to a continuous area. This requirement may not be a problem as long as recording and playback are performed within the confines of the corresponding schemes; however, in the case of recording undefined index data reflecting the preferences of a user, it may be difficult to additionally record such new user-defined index information while maintaining compatibility.

Accordingly, an embodiment of the present invention relates to defining an area for recording index data that is separated from the area for recording content data, and storing the index data in this area. It is noted that the index data are preferably arranged to follow or precede the content data so that the content data and the index data may be continuously accessed and degradation of search functions owing to dispersed access may be prevented. Also, it is noted that content data are preferably collectively recorded in a front portion area or a rear portion area of the recording medium so that influences may be reduced in a case where contents are appended. Also, an embodiment of the present invention relates to a method of generating in which an index area is arranged to be movable.

In the following, a preferred embodiment of the present invention in which a linear addressed optical disk is used as a recording medium, and an optical disk drive is used as a recording apparatus is described with reference to the accompanying drawings.

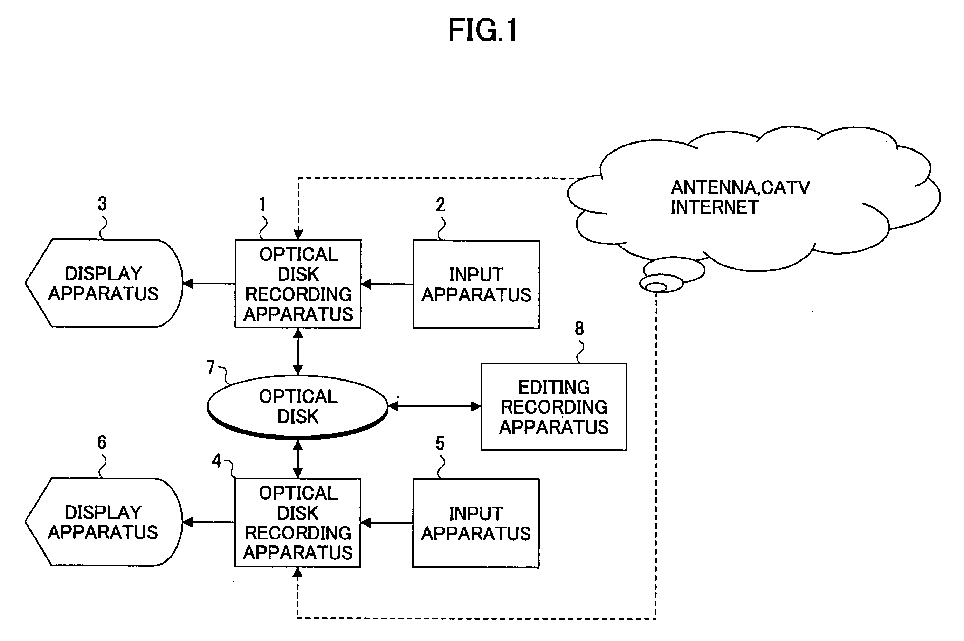

FIG. 1 is a block diagram illustrating a configuration of a system including one or more optical disk recording apparatuses according to an embodiment of the present invention.

An optical disk recording apparatus 1 on the upper side of FIG. 1 realizes good usability and includes an input apparatus 2 such as a remote control. The optical disk recording apparatus 1 is configured to receive data such as video or audio from another medium such as an antenna, CATV, or the Internet via a tuner or a network interface, and record the received data on an optical disk 7. It is noted that the optical disk recording apparatus 1 optionally includes a display apparatus 3 such as a CRT or a LCD in order to improve the convenience of input operations.

An optical disk recording apparatus 4 on the lower side of FIG. 1 is arranged within a computer such as a host computer or a personal computer and is configured to receive command inputs from an input apparatus 5 such as a keyboard and/or a mouse. Also, the optical disk recording apparatus 4 includes a display apparatus 6 such as a CRT or a LCD. It is noted that the optical disk recording apparatus 1 is directed for realizing detailed editing and search operations. Also, it is noted that the remote control, the keyboard, and the mouse may be used as means for inputting and/or selecting index data. The optical disk recording apparatus 4 is configured to receive data such as video or audio from another medium such as an antenna, CATV, or the Internet via a tuner or a network interface to record the received data on an optical disk 7; and edit the video or audio data and record the edited data on the optical disk 7.

The optical disk recording apparatuses 1 and 4 are both connected to a host computer via an interface such as an ATAPI. The illustrated system also includes an editing recording apparatus 8 which may be a dedicated apparatus used in a studio, for example. The editing recording apparatus 8 is configured to enable detailed authoring and is often designed for use by a professional. According to the present embodiment, recording apparatuses suited for various locations and usages may be provided.

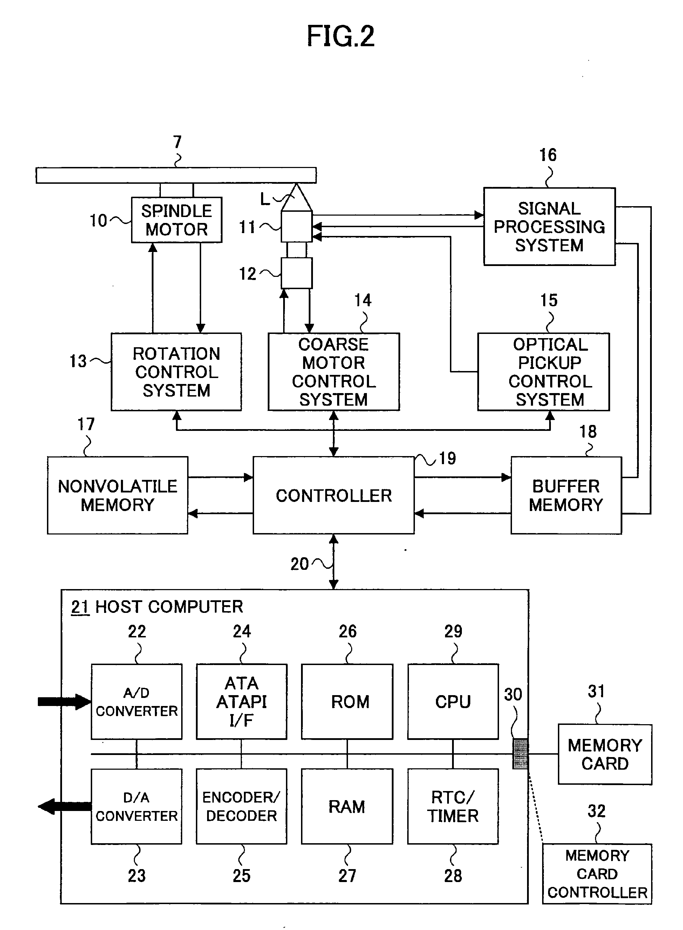

FIG. 2 is a block diagram illustrating a configuration of an optical disk recording apparatus (optical disk drive) according to an embodiment of the present invention.

It is noted that the optical disk recording apparatuses 1 and 4 may correspond to embodiments of the optical disk drive shown in this drawing. In one example, the illustrated optical disk drive may be a DVD+RW drive that is configured to record data on an optical disk (recording medium) 7 such as a DVD+RW that allows data recording and playback. The optical disk drive according to the present embodiment includes a spindle motor 10 for rotating the optical disk 7, a rotation control system 13 for controlling the rotation of the spindle motor 10, and an optical pickup 11 that irradiates laser light L for realizing data recording and playback operations on the optical disk 7.

Also, the optical disk drive of the present embodiment includes an optical pickup control system 15 for controlling the light emission drive of the laser light L irradiated by the optical pickup 11, a course motor 12 that moves the optical pickup 11 in radial directions of the optical disk 7, a coarse motor control system 14 that performs rotation drive control of the coarse motor 12, a signal processing control system 16 that controls the input/output of playback signals from the optical pickup 11 and recording signals to the optical pickup 11, and a controller 19. The controller 19 is realized by a microcomputer such as a CPU, a register, and a RAM, for example; and is configured to store various programs including a program according to an embodiment of the present invention (including various setting information for the programs) in a nonvolatile memory 17 such as a ROM, execute a recording method according to an embodiment of the present invention by controlling the CPU to execute procedures of one or more of the stored programs, and enable functions of components incorporated in an embodiment of the present invention.

Further, the optical disk drive of the present embodiment includes a buffer memory (cache memory) 18 that is used as an area for temporarily storing data such as data to be recorded on the optical disk 7 and data replayed from the optical disk 7 and temporarily storing data used by the controller 19 upon executing various processes, and an external interface 20 for realizing data exchange with a host computer 21 that is externally connected to the optical disk drive of the present embodiment.

The optical disk drive of the present embodiment is configured to accumulate data read from the optical disk 7 in the buffer memory 18 to transmit the accumulated data to the host computer 21. Also, the optical disk drive of the present embodiment is configured to convert data transmitted from the host computer 21 according to the type of the optical disk 7 via the buffer memory 18 and record the converted data on the optical disk 7, for example. Further, the optical disk drive of the present embodiment is configured to control start, interruption, and restart of recording; and setting and ejection of the optical disk 7, for example, via the controller 19. It is noted that communication is established between the optical disk drive of the present embodiment and the host computer 21 via the external interface 20. The communication involves issuing a command at the host computer 21 side and responding to the command at the optical disk drive side. It is noted that in a case where a digital controller is integrated at the host computer 21 side, the optical disk drive of the present embodiment may be connected thereto by an analog interface.

At the host computer 21 side, AD conversion of a video signal from the external side (e.g., an input from an antenna or a network) is performed by an A/D converter 22, data compression and development (e.g., high-speed substitution enabled by a CPU) are performed by an encoder/decoder 25, and DA conversion is performed by a PAL/NTSC video encoder in a D/A converter 23, for example.

Also, the host computer 21 includes a RTC (real time clock)/timer 28 for measuring the recording time and determining the actual time to create triggers for index generation and contents of the index.

Further, the host computer 21 includes an ATA/ATAPI interface (I/F) 24 to establish communication with the optical disk drive or a hard disk drive (not shown), for example.

The host computer 21 also includes a CPU 29, a ROM 26, and a RAM 27. The RAM 27 is used as a working memory and a buffer for audio/video data. The ROM 26 stores programs and operating systems for realizing overall control of the host computer 21. The ROM 26 may be a mask ROM, and more preferably a flush ROM corresponding to a nonvolatile memory that enables collective rewriting so that procedures may be simplified upon version upgrade, for example.

The host computer 21 may also include a memory card controller 32, which may be an input source of a digital camera image when a memory card 31 is inserted into a memory card slot 30, or a recording destination for index data, for example. Often times, the memory card 31 corresponds to a detachable flush ROM that may be used for transferring digital data to/from a PC and various other types of devices.

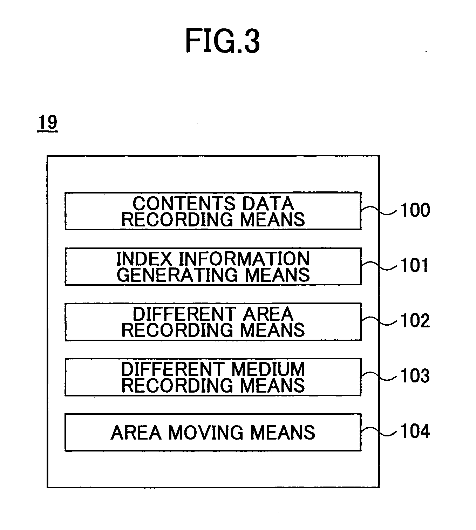

In the following, the controller 19 is described with reference to FIG. 3. The controller 19 includes content data recording means 100, index information generating means 101, different area recording means 102, different medium recording means 103, and area moving means 104.

The content data recording means 100 records time series content data on a recording medium. The index information generating means 101 generates index information associated with the time series content data which index information contains one or more portions of the content data. The different area recording means 102 records the index information generated by the index information generating means 101 in an area different from that for the content data. The different medium recording means 103 records the index information generated by the index information generating means 101 on a recording medium different from the recording medium for recording the content data. The area moving means 104 moves the index information to an area that does not overlap with the area in which the content data are recorded.

It is noted that the index information generating means 101 may correspond to a function realized by the controller 19 by executing the procedures of a program according to an embodiment of the present invention that is stored in the nonvolatile memory 17. It is noted that the program according to the present embodiment may also be stored in the ROM 26 of the host computer 21, and the CPU 29 may be configured to execute the procedures of this program.

For example, when recording of an image is started, the controller 19 is configured to process a write command including data such as video generated at the host computer 21 side and predetermined chapter images. In addition to such processing, the controller 19 is configured to generate data on a frame and/or a recorded time (e.g., Greenwich Mean Time and the time elapsed from the start) as index information, and record the generated index information on the optical disk 7 at an appropriate timing during or after the image recording.

In the following, descriptions are given of exemplary formats that are realized in a case where content data and index information are recorded on an optical disk by the optical disk drive of the present embodiment.

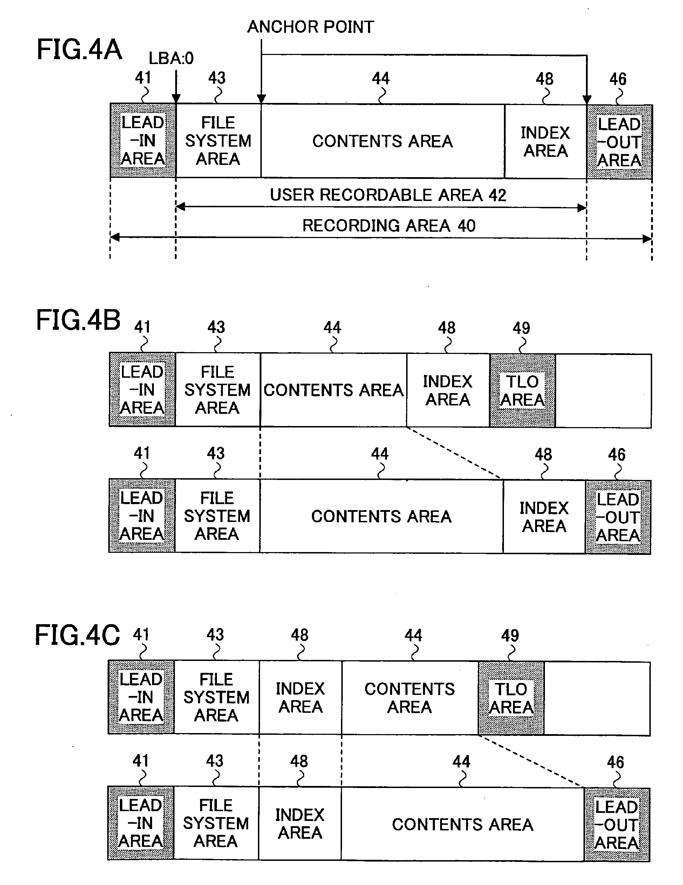

FIGS. 4A-4C are diagrams illustrating formats realized when an index area is arranged before or after a contents area of an optical disk.

As is illustrated in FIG. 4A, a front portion of a recording area 40 of a recording medium corresponds to a lead-in area 41 that is configured to record information pertaining to the recording medium including information on the recording medium itself followed by layout information of several recording units. The lead-in area 41 is followed by a user recordable area 42 in which data may be recorded by a user.

The address of the head sector of the user recordable area 42 is set to zero, and is represented as LBA: 0. A predetermined address of the user recordable area 42 is referred to as an anchor point corresponding to a predetermined location defined for every file system such as an operating system (OS). The anchor point corresponds to a sector indicating the starting location for reading user data.

It is noted that a file system area 43 is arranged at the head of the user recordable area 42, the file system area 43 corresponding to an area defining the location, size, time, and attribute, for example, of individual files or directories that are recorded. This followed by an anchor point, a contents area 44 for storing the time series content data, an index area 48 for storing index information associated with the time series content data which index information includes one or more portions of the content data, and then another anchor point.

Then, a pre-recorded area referred to as a lead-out area 46 is arranged at the end of the recording area 40, and this area is configured to prevent an optical pickup that reads/writes data from jumping.

When the recording of content data is completed as is illustrated in FIG. 4A, the index area 48 may be arranged immediately before the contents area 44. It is noted that there may be cases in which content data are not completely recorded and additional content data have to be appended as is illustrated in FIG. 4B. In this case, the index area 48 has to be moved or overwritten, and accordingly, the index area 48 is arranged immediately after the contents area 44. It is noted that the realization of such a format is limited to rewritable optical disks.

On the other hand, as is illustrated in FIG. 4C, in a case where the index area 48 is arranged immediately before (in front of) the contents area 44, the index area 48 may not have to be moved. In this case, the size of the index area 48 is fixed beforehand. Thus, although the present format may be used in a write-once optical medium, a discontinuous area may be generated in this case, and thereby, in order to improve compatibility, recording has to be completed in the form of a continuous recording from the lead-in area 41 to the lead-out area 46.

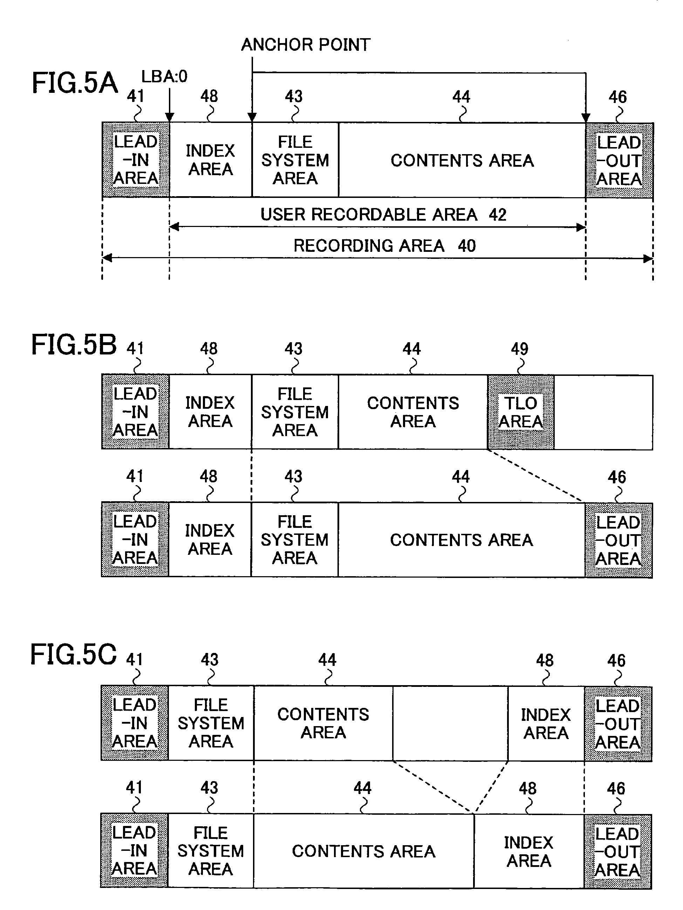

FIGS. 5A-5C are diagrams illustrating formats realized when the index area is arranged at the forefront portion or the backmost portion of the user recordable area of the optical disk.

As is illustrated in FIG. 5A, by arranging the index area 48 at the forefront (or backmost portion) of the user recordable area 42 the location of the index area 48 may be easy to find, and high responsiveness may be realized.

As is illustrated in FIG. 5B, by arranging the index area 48 at the forefront of the user recordable area 42, the size of the index area 48 is fixed as in the case of FIG. 4C. However, even when the size of the index area 48 is fixed beforehand, adequate index information may be generated by arranging the index area 48 to have an adequate size.

FIG. 5C illustrates a case in which the index area 48 is arranged at the end (backmost portion) of the user recordable area 42. This format is similar to the format illustrated in FIG. 10, and thereby, high playback compatibility may be realized. Also, in this format, both the contents area 44 and the index area 48 may be freely extended. Specifically, the index are 48 may be extended in the negative direction. Although such an arrangement may not be so convenient for performing subsequent search operations, this arrangement may be convenient for handling index information that is frequently updated since newer data are recorded in prior addresses.

It is noted that a rewritable optical disk is preferably used in the case of implementing this format, and formatting is performed till the end of the recording area to enable random access.

For example, usability may be improved in a DVD+RW or a CD-MRW since background formatting may be performed in such recording media. It is noted that the present format may be applied to a write-once optical disk; however, compatibility may only be realized after recording on the disk is completed.

As can be appreciated, with respect to arranging the index area at the front or at the end of the contents area, it is difficult to categorically determine the format that realizes greater advantages. Accordingly, an apparatus may be configured to enable format selection according to one embodiment.

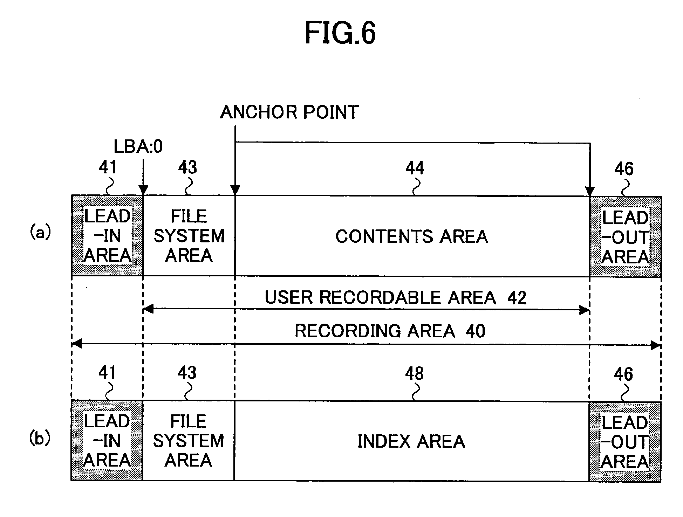

FIG. 6 is a diagram illustrating a format realized in a case where the index area for storing index information relating to content data is arranged on an optical disk that is different from the optical disk on which the content data are recorded.

In the present case, index information may be recorded to realize the same layout as that illustrated in FIG. 10 on an optical disk (see FIG. 6 (b)) that is different from the optical disk on which content data are recorded (see FIG. 6 (a)). According to the present scheme, plural optical disk drives have to be used or the optical disk has to be exchanged after content data recording is completed to realize index information recording. However, since the optical disk storing the index information may be arranged to have the same layout as that of the playback dedicated optical disk, playback compatibility may be guaranteed. It is noted that the present scheme may suitably be used in applications that enable the use of a memory card in addition to an optical disk, for example.

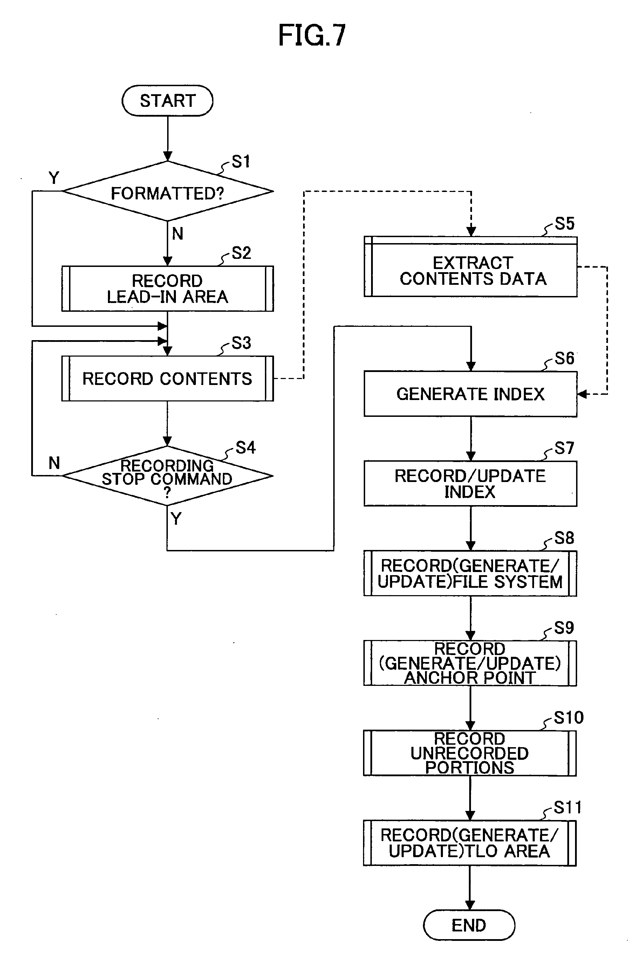

FIG. 7 is a flowchart illustrating operations performed by the controller of the optical disk drive of the present embodiment for recording index information after content data recording is completed.

According to the present scheme, when content data recording is started or when an optical disk is inserted, the controller 19 determines whether the optical disk has been formatted in step S1. If the optical disk is formatted, the process moves on to step S3, and if the optical disk is not formatted, a lead-in area is recorded in a recording area of the optical disk to format the optical disk in step S2 (this step is not performed for a write-once optical disk) after which the process moves on to step S3. The controller 19 records content data in the contents area of the optical disk in step S3, and at the same time, separately stores data of the recorded content data that are to be used as index information. The storage destination of the data to be used as index information may preferably be a RAM, a non-influential recording area, or another recording medium, for example.

In step S4, the controller 19 determines whether a recording stop command such as that from a stop button has been issued. If no recording stop command is issued, the process goes back to step S3. If a recording stop command is issued, the process moves on to step S6 at which index information generation is performed. In step S5, content data extraction is performed on the data to be used as index information that are stored in the process of step S3 (i.e., further processing is performed based on user instructions), index information is generated in step S6, and the generated index information is recorded or updated in the index area of the optical disk in step S7.

Specifically, the controller 19 compiles and generates index information containing portions of the content data based on the content data after completing the recording of the content data, and records the generated index information.

The controller 19 then records (generates or updates) a file system for enabling other apparatuses to recognize the content data and the index information in step S8, records (generates or updates) an anchor point in step S9, and performs a recording process on unrecorded portions in step S10 if portions that are unrecorded exist within the area from the LBA: 0 to the maximum number address that has been subject to the present recording process to thereby realize a continuous area. Then, the controller 19 records (generates or updates) a temporary lead-out area (TLO area) in step S11 to thereby end the present process.

It is noted that a lead-out area that is recorded in a recordable area of a DVD+RW or a CD-MRW is referred to as a temporary lead-out (TLO) area. According to the present scheme, index information may be collectively recorded later, and thereby, a user may be able to process the index information as is necessary or desired. Therefore, the present scheme may be suitable for enabling the user to generate an index that is adapted for the user.

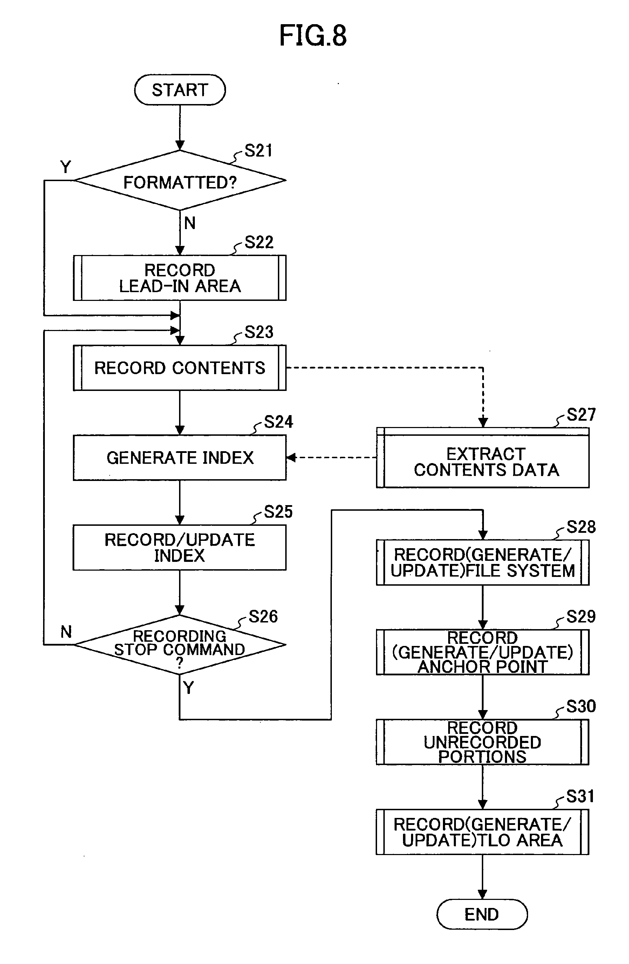

FIG. 8 is a flowchart illustrating operations performed by the controller of the optical disk drive of the present embodiment for recording index information simultaneously with the recording of content data.

According to the present scheme, when content data recording is started or when an optical disk is inserted, the controller 19 determines whether the optical disk has been formatted in step S21. If the optical disk is formatted, the process moves on to step S23, and if the optical disk is not formatted, a lead-in area is recorded in a recording area of the optical disk to format the optical disk in step S22 (this step is not performed for a write-once optical disk) after which the process moves on to step S23. The controller 19 records content data in the contents area of the optical disk in step S23, and in parallel with the start of the contents recording, separately stores data of the recorded content data that are to be used as index information in step S27. The storage destination of the data to be used as index information may preferably be a RAM, a non-influential recording area, or another recording medium, for example.

Then, the controller 19 moves on to step S24 for performing an index information generating process. In step S27, content data extraction is performed on the data to be used as index information that are stored in the process of step S23 (i.e., further processing is performed based on user instructions) so that index information is generated, and the generated index information is recorded or updated in the index area of the optical disk in step S25.

Specifically, the controller 19 sequentially generates index information containing a part of the content data even during the recording of the content data, and records the generated index information.

It is noted that the generation and recording of index information may be performed substantially at the same time in a hard disk, for example, where the recording speed and the seek speed are set to high speeds. However, in an exchangeable medium such as an optical disk, the recording speed and the seek speed are relatively slow, and thereby, the index information is preferably accumulated before being stored in this case. That is, in the present scheme index information is sequentially generated, and the generated index information is preferably accumulated to a certain amount before being recorded.

Then, the controller 19 determines whether a recording stop command such as a command by a stop button has been issued in step S26. If a recording stop command is not issued, the process goes back to step S23. If a recording stop command is issued, the controller 19 records (generates or updates) a file system for enabling other apparatuses to recognize the content data and the index information in step S28, records (generates or updates) an anchor point in step S29, and performs a recording process on unrecorded portions in step S30 if portions that are unrecorded exist within the area from the LBA: 0 to the maximum number address that has been subject to the present recording process to thereby realize a continuous area. Then, the controller 19 records (generates or updates) a temporary lead-out area (TLO area) in step S31 to thereby end the present process.

According to the present scheme, the recording of index information may already be completed upon issuing an end command, and thereby, the duration from the time the end command is issued to the time at which the optical disk can actually be removed from the optical disk drive may be reduced. In this respect, the present scheme may be suitably used for recording index information relying on time periods and/or clock times. Examples of index information relying on time periods and/or clock times include index information in the form of a quick reference or a digest.

It is noted that steps S3 and S23 of the above-described processes correspond to a step of recording time series content data on a recording medium. Steps S6 and S24 correspond to an index information generating step. Steps S7 and S25 correspond to a step of recording index information generated by the index information generating step in an area of the recording medium that is different from that in which the content data are recorded or a step of recording index information generated by the index information generating step in a different recording medium from the recording medium on which the content data are recorded.

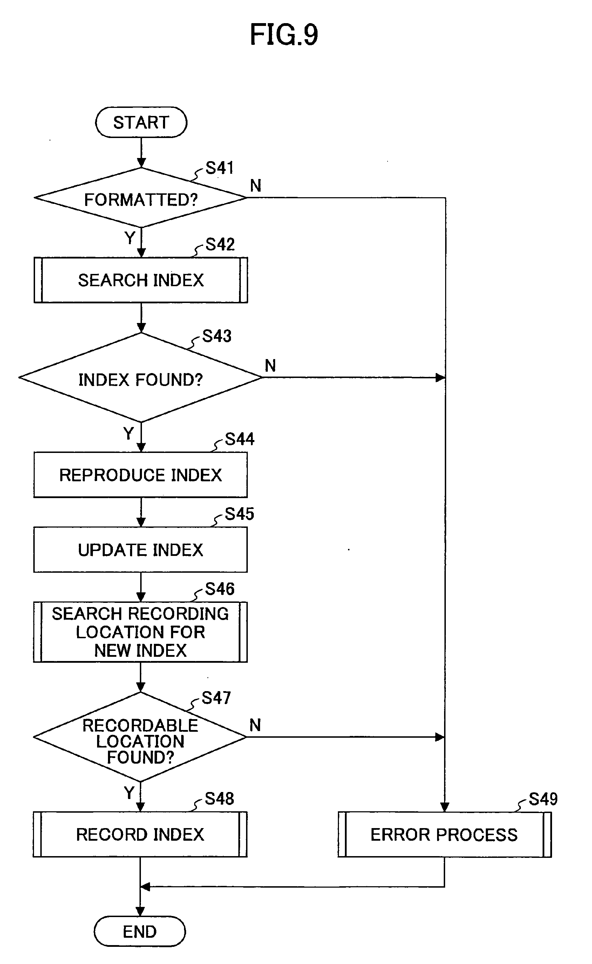

FIG. 9 is a flowchart illustrating a process of moving index information performed by the controller of the optical disk drive of the present embodiment.

In this process, the controller 19 determines whether the present optical disk is formatted in step S41. If the optical disk is not formatted, the process moves on to step S49 at which error processing is performed after which the process is ended.

If the controller 19 determines that the optical disk is formatted in step S41, the process moves on to step S42 to search for index information, and then the controller 19 determines whether index information has been found in step S43. If index information is not found, the process moves on to step S49 at which error processing is performed to end the present process.

If the controller 19 determines that index information has been found in step S43, the controller 19 reproduces the index information in step S44, updates the index information in step S45, searches a recordable location for recording the new index information in step S46, and determines whether a recordable location for the index information has been found in step S47. If such a recordable location for the index information is not found, the process moves on to step S49 at which error processing is performed to end the present process.

If the controller 19 determines that a recordable location for the index information has been found in step S47, the controller 19 records the index information in the recordable location in step 548, and ends the present process. It is noted that step S48 corresponds to a step of moving index information to an area that does not overlap with an area in which content data are recorded.

In the present process, the controller 19 first determines whether a recording process has already been performed on the present optical disk. Then, the controller 19 actually searches for the index information to determine whether such index information is recorded. If the index information is found, the controller 19 reproduces the index information and updates the index information as is necessary or desired based on user commands or times, for example. Then, the controller 19 searches for a recordable location for recording the new index information, and records the index information in the recordable location if such recording is possible. When the index information or a recordable location for the index information cannot be found, the controller processes such cases as errors.

It is noted that the present process may be implemented in a case where index information is overwritten as is described with reference to FIGS. 4B, or a case where index information is initially recorded in a front portion of the optical disk having a predetermined size but is moved to a back portion of the optical disk when more recording space is required, for example.

In the optical disk drive according to the present embodiment, an index relating to content data may be provided separately from the content data so that contents, search functions not included in conventional standards, and digests according to user preferences may be stored/used. Also, in the optical disk drive according to the present embodiment, index information that is not inseparable from its corresponding content data and is adapted for reuse and readability may be created. Also, the optical disk drive according to the present embodiment may store index information relating to content data in an area different from the area in which the content data are stored, and in this way, index information may be added while maintaining compatibility with conventional apparatuses.

Further, the optical disk drive according to the present embodiment may record index information relating to content data in a recording medium that is different from the recording medium on which the content data are stored, and in this way, index information may be used without encountering the side effects of generating/recording index information on the recording medium on which the content data are recorded. It is noted that the optical disk drive according to the present embodiment may record index information in another medium such as a built-in hard disk or a memory card to realize high-speed indexing and improve usability.

Also, the optical disk drive according to the present embodiment may collectively record index information at the end. In this case, although time may be required for post processing after content data recording, the index information may be generated after the overall content data are determined so that exhaustive index information may be generated. Also, in this case, a user may arbitrarily select portions to be included in the index information.

Also, in the optical disk drive according to the present embodiment, the recording of index information may be performed in parallel with the recording of content data. In this case, since the optical disk drive records the index information during content data recording, a user cannot arbitrarily select portions to be included in the index information; however, the process may be realized in a substantially automatic manner. In this way, functions may be realized for indexing at predetermined time intervals, indexing at predetermined clock times, indexing by dividing commercial advertisements from the main contents in response to audio signals, index generation for fast forwarding or rewinding beyond the prescribed requirements, and digest generation, for example.

Further, the optical disk drive according to the present embodiment may move index information to another area. In a case where an index area is arranged immediately after the contents area and further content data are to be appended, if the contents area is required to be continuous, the index area has to be overwritten. By implementing the present function, the index information may be temporarily stored in a RAM, for example, and cleared after which the contents area may be moved to the end of the contents area or at the end of a recordable area, for example, to thereby prevent the index information from being erased. Also, in a preferred embodiment, the index information may be further changed or updated while the index information is cleared or moved based on the content data that are appended.

Also, it is noted that in the above-described embodiment of the present invention, the controller 19 of the optical disk drive realizes the functions according to embodiments of the present invention. However, the present invention is not limited to such an embodiment, and in another embodiment, the CPU 29 of the host computer 21 may be configured to realize the functions according to embodiments of the present invention by controlling the optical disk drive in a similar manner as is describe above.

### INDUSTRIAL APPLICABILITY

A recording apparatus, a recording method, and a program according to embodiments of the present invention may be applied to a video recorder, a video camcorder, a digital editing apparatus, a nonlinear editing apparatus, a digital camera, a game console, an a DVD player, for example.

## Claims

1. A recording apparatus comprising:
means for recording time series content data on a recording medium;
index information generating means for generating index information relating to the time series content data which index information includes a part of the content data; and
means for recording the index information generated by the index information generating means in a different area of the recording medium which different area is different from an area of the recording medium in which the content data are recorded.

2. The recording apparatus as claimed in claim 1, wherein
the different area of the recording medium corresponds to at least one of an area arranged immediately before the area of the recording medium in which the content data are recorded, and an area arranged immediately after the area of the recording medium in which the content data are recorded.

3. The recording apparatus as claimed in claim 1, wherein
the different area of the recording medium corresponds to at least one of an area arranged at a forefront portion of a user recordable area of the recording medium, and an area arranged at a backmost portion of a user recordable area of the recording medium.

4. A recording apparatus comprising:
means for recording time series content data on a recording medium;
index information generating means for generating index information relating to the time series content data which index information includes a part of the content data; and
means for recording the index information generated by the index information generating means on a different recording medium that is different from the recording medium on which the content data are recorded.

5. The recording apparatus as claimed in claim 1, wherein
the index information generating means is configured to collectively generate the index information relating to the time series content data and including a part of the content data after recording of the content data is completed.

6. The recording apparatus as claimed in claim 1, wherein
the index information generating means is configured to sequentially generate the index information relating to the time series content data and including a part of the content data during recording of the content data.

7. The recording apparatus as claimed in claim 1, further comprising:
means for moving the index information to an area that does not overlap with the area in which the content data are recorded.

8. A recording method comprising:
a step of recording time series content data on a recording medium;
an index information generating step of generating index information relating to the time series content data which index information includes a part of the content data; and
a step of recording the index information generated by the index information generating means in a different area of the recording medium which different area is different from an area of the recording medium in which the content data are recorded.

9. The recording method as claimed in claim 8, wherein
the different area of the recording medium corresponds to at least one of an area arranged immediately before the area of the recording medium in which the content data are recorded, and an area arranged immediately after the area of the recording medium in which the content data are recorded.

10. The recording method as claimed in claim 8, wherein
the different area of the recording medium corresponds to at least one of an area arranged at a forefront portion of a user recordable area of the recording medium, and an area arranged at a backmost portion of a user recordable area of the recording medium.

11. A recording method comprising:
a step of recording time series content data on a recording medium;
an index information generating step of generating index information relating to the time series content data which index information includes a part of the content data; and
a step of recording the index information generated by the index information generating means on a different recording medium that is different from the recording medium on which the content data are recorded.

12. The recording method as claimed in claim 8, wherein
the index information generating step includes a step of collectively generating the index information relating to the time series content data and including a part of the content data after recording of the content data is completed.

13. The recording method as claimed in claim 8, wherein
the index information generating step includes a step of sequentially generating the index information relating to the time series content data and including a part of the content data during recording of the content data.

14. The recording method as claimed in claim 8, further comprising:
a step of moving the index information to an area that does not overlap with the area in which the content data are recorded.

15. A computer-readable medium storing a program that is run on a computer and is executed by the computer to perform:
a step of recording time series content data on a recording medium;
an index information generating step of generating index information relating to the time series content data which index information includes a part of the content data; and
a step of recording the index information generated by the index information generating means in a different area of the recording medium which different area is different from an area of the recording medium in which the content data are recorded.

16. The computer-readable medium as claimed in claim 15, wherein
the different area of the recording medium corresponds to at least one of an area arranged immediately before the area of the recording medium in which the content data are recorded, and an area arranged immediately after the area of the recording medium in which the content data are recorded.

17. The computer-readable medium as claimed in claim 15, wherein
the different area of the recording medium corresponds to at least one of an area arranged at a forefront portion of a user recordable area of the recording medium, and an area arranged at a backmost portion of a user recordable area of the recording medium.

18. A computer-readable medium storing a program that is run on a computer and is executed by the computer to perform:
a step of recording time series content data on a recording medium;
an index information generating step of generating index information relating to the time series content data which index information includes a part of the content data; and
a step of recording the index information generated by the index information generating means on a different recording medium that is different from the recording medium on which the content data are recorded.

19. The computer-readable medium as claimed in claim 15, wherein
the index information generating step includes a step of collectively generating the index information relating to the time series content data and including a part of the content data after recording of the content data is completed.

20. The computer-readable medium as claimed in claim 15, wherein
the index information generating step includes a step of sequentially generating the index information relating to the time series content data and including a part of the content data during recording of the content data.

21. The computer-readable medium as claimed in claim 15, further comprising:
a step of moving the index information to an area that does not overlap with the area in which the content data are recorded.
